(19) **Europäisches Patentamt / European Patent Office / Office européen des brevets**

(11) **EP 3 983 183 B1**

(12) **FASCICULE DE BREVET EUROPEEN**

(45) Date de publication et mention
de la délivrance du brevet:
**06.08.2025 Bulletin 2025/32**

(21) Numéro de dépôt: **20731863.5**

(22) Date de dépôt: **10.06.2020**

(51) Classification Internationale des Brevets (IPC):
**B26D 5/02** *(2006.01)* **B26D 5/08** *(2006.01)*
**B26D 7/01** *(2006.01)* **B26D 5/00** *(2006.01)*
**B26D 5/06** *(2006.01)* **B26F 1/38** *(2006.01)*
**B26F 3/00** *(2006.01)* **B23K 26/08** *(2014.01)*
**B23K 26/10** *(2006.01)* **B23K 26/38** *(2014.01)*
**B23K 26/402** *(2014.01)* **B23K 103/00** *(2006.01)*

(52) Classification Coopérative des Brevets (CPC):
**B26F 1/3813; B23K 26/0869; B23K 26/10;**
**B23K 26/38; B23K 26/402; B26D 5/00; B26D 5/02;**
**B26D 5/06; B26D 5/08; B26D 5/086; B26D 7/01;**
**B26F 3/004;** B23K 2103/30; B26D 2005/002;
B26D 2210/02

(86) Numéro de dépôt international:
**PCT/EP2020/066131**

(87) Numéro de publication internationale:
**WO 2020/249636 (17.12.2020 Gazette 2020/51)**

(54) **DISPOSITIF DE DEPLACEMENT D'UNE TÊTE DE TRAITEMENT ET D'UN PLATEAU**

VORRICHTUNG ZUM BEWEGEN EINES BEHANDLUNGSKOPFES UND EINER SCHALE

DEVICE FOR MOVING A TREATMENT HEAD AND A TRAY

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **12.06.2019 FR 1906250**

(43) Date de publication de la demande:
**20.04.2022 Bulletin 2022/16**

(73) Titulaire: **Hydroprocess**
**71100 Chalon sur Saone (FR)**

(72) Inventeur: **DEREIMS, Philippe**
**71100 Chalon sur Saone (FR)**

(74) Mandataire: **Oudin, Stéphane**
**GUIU IP**
**10, rue Paul Thénard**
**21000 Dijon (FR)**

(56) Documents cités:
**EP-A1- 3 247 539 WO-A2-2010/121601**
**FR-A1- 2 938 463 GB-A- 2 353 503**

EP 3 983 183 B1

**Description**

DOMAINE TECHNIQUE

La présente invention concerne de manière générale un dispositif de déplacement d'une tête de traitement et d'un plateau et plus particulièrement un dispositif de déplacement d'une tête de découpe et d'un plateau, de conception simple, facilement nettoyable, compact et destiné à la découpe de produits alimentaires.

TECHNIQUE ANTERIEURE

Dans le domaine des dispositifs de déplacement de tête de découpe de produits alimentaires, on connaît bien les dispositifs de déplacement de tête de découpe par jet d'eau constitué d'un support sur lequel est articulé un bras télescopique. Ce bras est généralement muni de chariots aptes à se déplacer sur des rails par le biais de moyens d'actionnement permettant son déplacement selon les directions rectangulaires $\underline{x}$ et $\underline{y}$. Il comporte également régulièrement, à une de ses extrémités, une buse de découpe réglable en hauteur (selon $\underline{z}$) apte à balayer un plateau de découpe souvent fixe destiné à supporter un échantillon. On retrouve, par exemple, ce type de support dans la demande de brevet française FR2938463.

Les inconvénients de ces dispositifs résident dans le fait qu'ils ont une structure complexe (bras télescopique constitué de chariots et de rails...), ce qui rend leur mise en place difficile et augmente les coûts de fabrication.

De plus, ces structures constituées de plusieurs organes multiplient le nombre de recoins disponibles ce qui porte atteinte à la nettoyabilité du dispositif. En effet, lors de la découpe d'un produit alimentaire, de fines particules sont projetées autour du produit et viennent se déposer notamment sur les organes de découpe (rails, chariots, etc). Ces dépôts entraînent, dans le domaine alimentaire particulièrement, une nécessité de nettoyage très fréquent afin de limiter le risque d'apparition de bactéries et engendre par voie de conséquence, une perte de temps et d'argent non négligeable. Par ailleurs, le plateau étant fixe, le bras, pour réaliser certaines découpes, doit effectuer des mouvements de grandes amplitudes ce qui augmente la surface de la zone de découpe et accroît l'encombrement de la machine.

Pour remédier en partie à ces inconvénients, on connaît bien des dispositifs de déplacement entraînant un plateau et une tête de découpe jet d'eau dans des directions rectilignes perpendiculaires. Ce type de dispositif présente une meilleure nettoyabilité et limite les risques de contamination, notamment des faces inférieures des produits découpés, grâce à une fente étroite située sous le produit en déplacement et permettant la récupération des effluents résultants de la découpe.

Cependant, les dispositifs de ce type ont des actionneurs positionnés sur les côtés de la zone de déplacement, ce qui a tendance également à augmenter l'encombrement de la machine. En effet, pour un plateau de longueur B et de largeur A, ces dispositifs ont généralement un encombrement supérieur à 4 x A x B.

On connait également un dispositif de déplacement dans un plan P d'un plateau parallèlement à lui-même tel que celui décrit dans la demande de brevet européen EP 3 247 539.

PRESENTATION DE L'INVENTION

La présente invention a donc pour but de pallier les inconvénients précédemment cités en proposant un dispositif de déplacement par rapport à un plan $\underline{P}$ d'une tête de traitement et d'un plateau, dans lequel ledit plateau de forme quelconque est inscrit dans un rectangle de largeur $\underline{A}$ et de longueur $\underline{B}$, et comporte un premier moyen d'entraînement apte à coopérer avec un premier moyen d'actionnement de sorte à déplacer le plateau en translation dans un plan parallèle audit plan $\underline{P}$ sur une zone de déplacement formée d'au moins deux bords perpendiculaires associée à un repère $\underline{x}$, $\underline{O}$, $\underline{y}$, suivant une direction normalement parallèle à l'un desdits axes $\underline{x}$ ou $\underline{y}$, le rapport de la surface de la zone de déplacement sur la surface du rectangle circonscrit au plateau étant au moins égal à 2, ledit dispositif étant remarquable en ce qu'il comporte au moins un bras de longueur $\underline{R}$ mobile, monté pivotant à l'une de ses extrémités autour d'un axe $\underline{c}$ perpendiculaire audit plan $\underline{P}$, mis en mouvement par un second moyen d'actionnement et comprenant à l'autre extrémité une tête de traitement, ledit axe $\underline{c}$ étant situé dans la zone de déplacement du plateau et coupant ladite zone de déplacement au point $\underline{Q}$.

Avantageusement, le rapport de la surface de la zone de déplacement sur la surface du rectangle circonscrit au plateau est supérieur ou égal à 2 mais strictement inférieur à 4.

De manière préférentielle, le bras est positionné de sorte à balayer le plateau selon un angle ouvert dans le sens de l'axe de déplacement $\underline{x}$ ou $\underline{y}$ et la zone de déplacement est un rectangle dont la surface est sensiblement égale à :

- pour un dispositif dont le plateau se déplace dans la direction de l'axe $\underline{x}$, dont le point $\underline{Q}$ est positionné en B/2 selon l'axe $\underline{y}$ et dont la tête de traitement est positionnée en A selon l'axe x lorsqu'elle est aux extrémités de sa trajectoire :

$$(2 \times \underline{A} + \underline{\varepsilon}) \times (\underline{B} + \underline{\delta})$$

dans lequel, $\delta$ représente l'encombrement du premier moyen d'entraînement suivant l'axe $\underline{y}$ et $\varepsilon$ la flèche de la trajectoire de la tête de traitement par rapport à une droite verticale positionnée en A selon

l'axe $\underline{x}$;

- pour un dispositif dont le plateau se déplace dans la direction de l'axe $\underline{y}$, dont le point $\underline{Q}$ est positionné en A/2 selon l'axe $\underline{x}$ et dont la tête de traitement est positionnée en $\underline{B}$ selon l'axe $\underline{y}$ lorsqu'elle est aux extrémités de sa trajectoire :

$$(2 \times \underline{B} + \underline{\varepsilon}) \times (\underline{A} + \underline{\delta})$$

dans lequel, $\underline{\delta}$ représente l'encombrement du premier moyen d'entraînement suivant l'axe $\underline{x}$ et $\varepsilon$ la flèche de la trajectoire de la tête de traitement par rapport à une droite verticale positionnée en B selon l'axe $\underline{y}$,

De manière avantageuse, l'axe $\underline{c}$ du bras mobile comporte un second moyen d'entraînement destiné à coopérer avec le second moyen d'actionnement.

Préférentiellement, la tête de traitement est mobile dans une direction normalement parallèle à l'axe $\underline{c}$ par le biais d'un troisième moyen d'actionnement. Avantageusement, le second moyen d'actionnement et le second moyen d'entraînement sont respectivement un actionneur du type motoréducteur muni d'un secteur denté entraînant une crémaillère courbe fixée sur l'axe $\underline{c}$ du bras mobile.

Préférentiellement, le troisième moyen d'actionnement est un système vis-écrou.

De manière avantageuse, le premier moyen d'actionnement et le premier moyen d'entraînement sont respectivement un actionneur du type motoréducteur muni d'un pignon entraînant une crémaillère fixée sur le plateau.

De manière préférentielle, le plateau est constitué d'un cadre articulé autour d'un élément de guidage et d'une plaque centrale de sorte que ledit cadre soit escamotable, en ce que le premier moyen d'entraînement du plateau est positionné sur ledit cadre de sorte que la plaque puisse être retiré dudit cadre et en ce que $\underline{\delta}$ représente l'encombrement du premier moyen d'entraînement et de l'élément de guidage suivant l'axe $\underline{y}$ ou $\underline{x}$, respectivement pour un déplacement du plateau dans la direction de l'axe $\underline{x}$ ou $\underline{y}$.

Avantageusement, la tête de traitement est une tête permettant la découpe jet d'eau.

De manière préférentielle, le bras mobile est creux pour accueillir le passage notamment de l'eau très haute pression et de l'air comprimé.

BREVE DESCRIPTION DES FIGURES

[Fig 1] représente une vue cavalière d'une machine de découpe par jet d'eau sur laquelle est installé un dispositif de déplacement selon l'invention.
[Fig 2] représente une vue de dessus d'une machine de découpe par jet d'eau sans la partie supérieure du bâti sur laquelle est installé un dispositif de déplacement selon l'invention.
[Fig 3] représente une vue de dessus d'un dispositif de déplacement dans lequel le plateau est en mouvement suivant l'axe x, selon l'invention.
[Fig 4] représente une vue de côté d'un dispositif de déplacement entouré d'un capot dans lequel le plateau est en mouvement suivant l'axe $\underline{x}$, selon l'invention.

DESCRIPTION DETAILLEE DE L'INVENTION

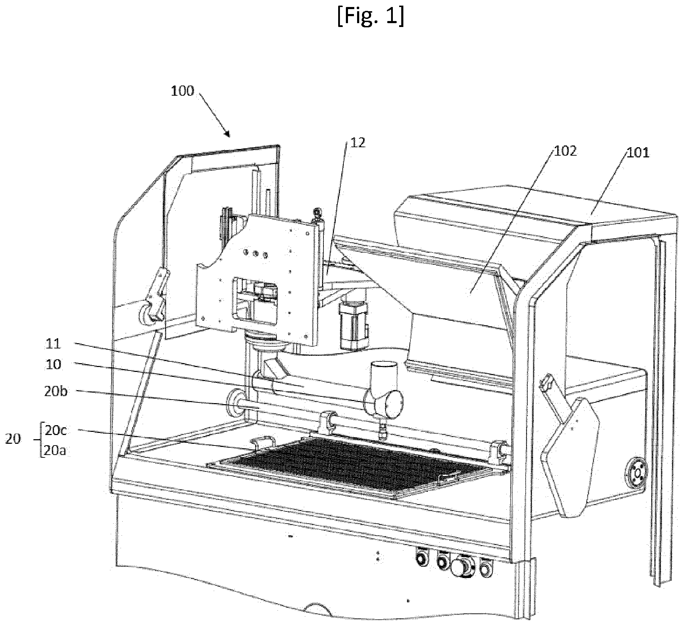

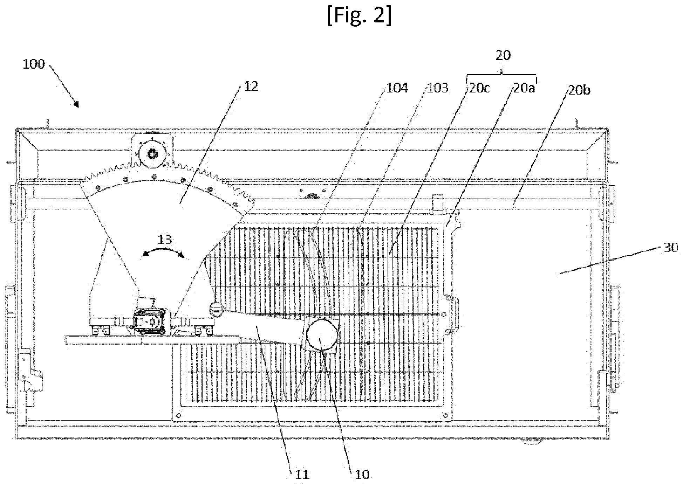

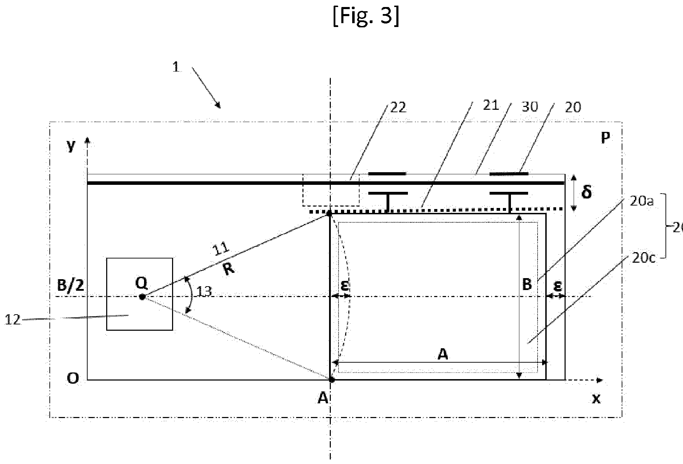

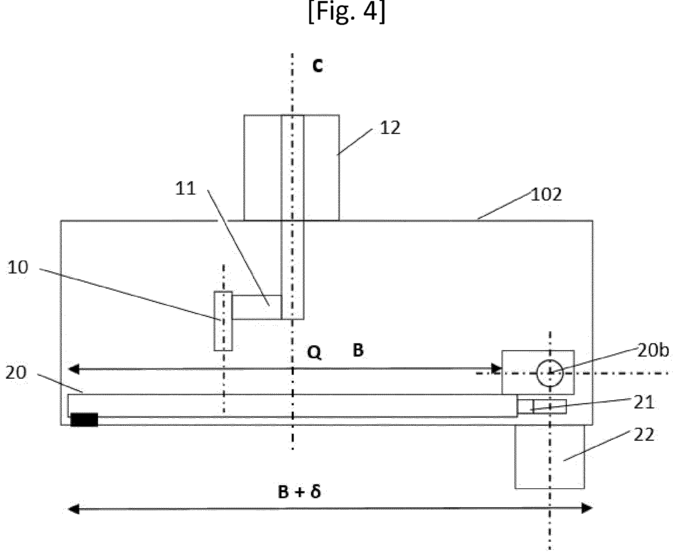

En référence aux figures 1 à 4, il est décrit un dispositif de déplacement 1 par rapport à un plan $\underline{P}$, d'une tête de traitement 10 et d'un plateau 20, dans lequel ledit plateau 20 de forme quelconque est inscrit dans un rectangle de largeur $\underline{A}$ et de longueur $\underline{B}$, et comporte un premier moyen d'entraînement 21 apte à coopérer avec un premier moyen d'actionnement 22 de sorte à déplacer le plateau 20 en translation dans un plan parallèle audit plan $\underline{P}$ sur une zone de déplacement 30 formée d'au moins deux bords perpendiculaires associée à un repère $\underline{x}$, $\underline{O}$, $\underline{y}$, suivant une direction normalement parallèle à l'un desdits axes $\underline{x}$ ou $\underline{y}$, ledit dispositif 1 étant remarquable en ce qu'il comporte au moins:

un bras 11 de longueur $\underline{R}$ mobile, monté pivotant à l'une de ses extrémités autour d'un axe $\underline{c}$ perpendiculaire audit plan $\underline{P}$, mis en mouvement par un second moyen d'actionnement 12 et comprenant à l'autre extrémité une tête de traitement 10, ledit axe $\underline{c}$ étant situé dans la zone de déplacement 30 du plateau 20 et coupant ladite zone de déplacement 30 au point $\underline{Q}$,
et,
en ce que le rapport de la surface de la zone de déplacement 30 sur la surface du rectangle circonscrit au plateau 20 est au moins égal à 2.

Préférentiellement, le rapport de la surface de la zone de déplacement 30 sur la surface du rectangle circonscrit au plateau 20 est supérieur ou égal à 2 mais strictement inférieur à 4. Le plateau 20 destiné à supporter le produit à traiter (non représenté), est avantageusement un parallélogramme, cette forme permettant d'optimiser la surface disponible. Il pourra cependant avoir n'importe quelle forme plane, comme par exemple, une forme de triangle, de carré, de cercle... etc. Par ailleurs, le plan $\underline{P}$ dans lequel se déplace le plateau 20 en translation sera choisi pour être normalement horizontal. Il va de soi, que le dispositif de déplacement 1 pourra être utilisé dans une toute autre position sans sortir du cadre de la présente invention.

Considérant le cas où le dispositif de déplacement 1 est destiné à une machine de découpe jet d'eau 100, on choisira de fabriquer les différentes parties de ce dispositif 1 (bras 11, zone de déplacement 30, plateau 20, etc) dans un ou plusieurs matériaux résistants à la corrosion, par exemple, en acier inoxydable.

On appelle « moyen(s) d'entraînement » 21 d'un objet, la (ou les) partie(s) de cet objet coopérant directement avec le (ou les) moyen(s) d'actionnement 12, 22, pour mettre en mouvement cet objet.

On appelle « moyen(s) d'actionnement » 12, 22, un actionneur agissant sur le (ou les) moyens d'entraînement 21 d'un objet pour apporter l'énergie nécessaire à ce (ou ces) moyen(s) d'entraînement 21 pour mettre en mouvement l'objet.

On appelle « zone de déplacement » 30, la surface maximale que parcourt le plateau 20 lors de sa course.

On appelle « tête de traitement » 10, tout outil permettant d'effectuer une opération sur le produit à traiter (non représenté), on peut ainsi avoir par exemple, une tête d'observation pour analyser le produit, une tête de découpe (tête de découpe laser, jet d'eau etc...), une tête de soudage, une tête d'usinage (fraisage...), une tête de préhension etc. Ainsi, ce dispositif de déplacement 1 pourra être installé sur tout type de machines (machine de découpe, machine d'usinage...).

De manière préférentielle, le bras 11 est positionné de sorte à balayer le plateau 20 selon un angle ouvert 13 dans le sens de l'axe de déplacement $\underline{x}$ ou $\underline{y}$ et la zone de déplacement 30 est un rectangle dont la surface est sensiblement égale à :

- pour un dispositif 1 dont le plateau 20 se déplace dans la direction de l'axe $\underline{x}$, dont le point $\underline{Q}$ est positionné en B/2 selon l'axe y et dont la tête de traitement 10 est positionnée en A selon l'axe x lorsqu'elle est aux extrémités de sa trajectoire :

$$(2 \times \underline{A} + \varepsilon) \times (\underline{B} + \underline{\delta})$$

dans lequel, $\underline{\delta}$ représente l'encombrement du premier moyen d'entraînement 21 suivant l'axe $\underline{y}$ et $\varepsilon$ la flèche de la trajectoire de la tête de traitement 10 par rapport à une droite verticale positionnée en A selon l'axe $\underline{x}$;

- pour un dispositif 1 dont le plateau 20 se déplace dans la direction de l'axe $\underline{y}$, dont le point $\underline{Q}$ est positionné en A/2 selon l'axe $\underline{x}$ et dont la tête de traitement 10 est positionnée en B selon l'axe $\underline{y}$ lorsqu'elle est aux extrémités de sa trajectoire :

$$(2 \times \underline{B} + \varepsilon) \times (\underline{A} + \underline{\delta})$$

dans lequel, $\underline{\delta}$ représente l'encombrement du premier moyen d'entraînement 21 suivant l'axe $\underline{x}$ et $\varepsilon$ la flèche de la trajectoire de la tête de traitement 10 par rapport à une droite verticale positionnée en B selon l'axe $\underline{y}$;

La zone de déplacement 30 du plateau 20 est ainsi minimisée et le balayage du bras 11 est optimisé. Dans cette configuration, on choisira un angle de balayage 13 du bras 11 permettant de balayer toute la longueur $\underline{B}$ du rectangle circonscrit au plateau 20.

De manière avantageuse, l'axe $\underline{c}$ du bras 11 mobile comporte un second moyen d'entraînement (non représenté) destiné à coopérer avec le second moyen d'actionnement 12.

Préférentiellement, la tête de traitement 10 est mobile dans une direction normalement parallèle à l'axe $\underline{c}$ par le biais d'un troisième moyen d'actionnement (non représenté). Ce troisième moyen d'actionnement (non représenté) permettra de régler la tête de traitement 10 en hauteur. Ainsi, la position de la tête 10 pourra être ajustée en fonction, par exemple, de l'épaisseur du produit à découper dans le cas d'une tête de découpe (découpe laser, jet d'eau), de l'épaisseur de matière à retirer sur le produit à traiter dans le cas d'une tête d'usinage (fraisage) etc...

Avantageusement, le second moyen d'actionnement 12 et le second moyen d'entraînement (non représenté) sont respectivement un actionneur du type motoréducteur muni d'un secteur denté entraînant une crémaillère courbe fixée sur l'axe c du bras mobile 11. Ce système permet une répercussion fidèle du mouvement de la crémaillère sur la tête de traitement 10. Le mouvement de la tête 10 est ainsi contrôlé de manière précise. On choisira une distance entre l'axe du pignon et l'axe $\underline{c}$ proche de la longueur $\underline{R}$ du bras 11 et l'angle d'ouverture du secteur denté correspondra à l'angle de balayage 13 de la tête de traitement 10. On pourra également utiliser comme second moyen d'actionnement 12 un vérin électrique et comme second moyen d'entraînement (non représenté) une bielle qui sera fixée à l'axe c du bras 11. On peut également imaginer que le second moyen d'actionnement 12 soit un actionneur de type motoréducteur ou moteur couple. On choisira dans ce cas de figure un motoréducteur électrique à arbre creux permettant un fonctionnement réversible pour faire pivoter le bras 11 dans un sens ou dans l'autre avec précision autour de l'axe $\underline{c}$. Ce motoréducteur aura pour avantage sa compacité. Préférentiellement, le troisième moyen d'actionnement (non représenté) est un système vis-écrou.

De manière avantageuse, le premier moyen d'actionnement 22 et le premier moyen d'entraînement 21 sont respectivement un actionneur du type motoréducteur muni d'un pignon entraînant une crémaillère fixée sur le plateau 20. L'Homme du métier n'aura aucune difficulté pour choisir la forme et le pas des dents adaptés au déplacement précis du plateau 20 ou du bras 11 lors de la rotation des premier moyen d'actionnement 22 et second moyen d'actionnement 12. On pourrait également imaginer un couple premier moyen d'actionnement 22/ premier moyen d'entraînement 21 formé respectivement par un moteur linéaire et des aimants fixés sur le plateau 20.

De manière préférentielle, le plateau 20 est constitué d'un cadre 20a articulé autour d'un élément de guidage 20b et d'une plaque centrale 20c de sorte que ledit cadre 20a soit escamotable, le premier moyen d'entraînement 21 du plateau 20 est positionné sur ledit cadre 20a de sorte que la plaque (20c) puisse être retiré dudit cadre 20a et $\delta$ représente l'encombrement du premier moyen d'entraînement 21 et de l'élément de guidage 20b suivant l'axe $\underline{y}$ ou $\underline{x}$, respectivement pour un déplacement du plateau 20 dans la direction de l'axe $\underline{x}$ ou $\underline{y}$. Cet assemblage particulier permettra de retirer la plaque 20 c et ainsi de faciliter le nettoyage de la zone de déplacement 30 du plateau 20. Pour faciliter, la manipulation de la plaque 20c, des poignées pourront être ajoutées à ses extrémités. Le cadre 20a entrera en rotation sur l'élément de guidage 20b de sorte à être soulevé de la zone de découpe et à faciliter le nettoyage.

Avantageusement, la tête de traitement 10 est une tête permettant la découpe jet d'eau. Dans ce cas, la plaque 20c sera une grille métallique autorisant la récupération de l'eau de découpe. La tête 10 de découpe de ce dispositif 1 sera munie d'une buse alimentée en eau par une tubulure rigide sous pression.

De manière préférentielle, le bras 11 mobile est creux pour accueillir le passage notamment de l'eau très haute pression et de l'air comprimé. Le bras 11 et son pivot sont creux et pourront également accueillir tout fluide nécessaire au fonctionnement de la tête de traitement 10.

Le dispositif 1 de déplacement permet de réaliser une machine 100 de découpe compacte et facilement nettoyable. La machine 100 comportera avantageusement un bâti 101 métallique mécano-soudé de forme globalement parallélépipédique, sur lequel sera articulé un capot 102 transparent permettant d'isoler la zone de travail de manière étanche. Ce capot 102 sera préférentiellement insonorisé, pour un meilleur confort d'utilisation.

On comprend bien que l'Homme du métier pourra, sans difficulté, remplacer ce bâti mécano-soudé par un bâti ayant une autre structure.

Le second moyen d'actionnement 12 sera placé à l'extérieur de la zone de découpe de sorte à le protéger des projections d'eau et de produit pouvant se produire lors de la découpe.

De manière générale, tous les premier, second et troisième moyens d'actionnement 22, 12 sont situés à l'extérieur de la zone de découpe.

Le machine 100 de découpe comportera un bac de récupération 103 d'eau de coupe disposé sous le plateau 20 de découpe, muni d'une évacuation sur son extrémité inférieure et un système de pompage haute pression connecté au bras 11 mobile. La zone de déplacement 30 comportera une fente 104 communicant avec le bac de récupération 103, et étant positionnée sous la tête de traitement 10.

Possibilité d'application industrielle

Enfin, il est évident que le dispositif 1 suivant l'invention peut être adapté à tous les types de découpe telle que, par exemple, des découpes laser, et que les exemples que l'on vient de donner ne sont que des illustrations particulières en aucun cas limitatives quant au domaine d'application suivant l'invention.

## Revendications

1. Dispositif de déplacement (1) par rapport à un plan $\underline{P}$, d'une tête de traitement (10) et d'un plateau (20), dans lequel ledit plateau (20) de forme quelconque est inscrit dans un rectangle de largeur $\underline{A}$ et de longueur $\underline{B}$, et comporte un premier moyen d'entraînement (21) apte à coopérer avec un premier moyen d'actionnement (22) de sorte à déplacer le plateau (20) en translation dans un plan parallèle audit plan $\underline{P}$ sur une zone de déplacement (30) formée d'au moins deux bords perpendiculaires associée à un repère $\underline{x}$, $O$, $\underline{y}$, suivant une direction normalement parallèle à l'un desdits axes $\underline{x}$ ou $\underline{y}$, le rapport de la surface de la zone de déplacement (30) sur la surface du rectangle circonscrit au plateau (20) étant au moins égal à 2, ledit dispositif (1) étant **caractérisé en ce qu'**il comporte au moins un bras (11) de longueur $\underline{R}$ mobile, monté pivotant à l'une de ses extrémités autour d'un axe $\underline{c}$ perpendiculaire audit plan $\underline{P}$, mis en mouvement par un second moyen d'actionnement (12) et comprenant à l'autre extrémité une tête de traitement (10), ledit axe $\underline{c}$ étant situé dans la zone de déplacement (30) du plateau (20) et coupant ladite zone de déplacement (30) au point $\underline{Q}$.

2. Dispositif de déplacement (1) selon la revendication précédente, **caractérisé en ce que** le bras (11) est positionné de sorte à balayer le plateau (20), selon un angle ouvert (13) dans le sens de l'axe de déplacement $\underline{x}$ ou $\underline{y}$ et **en ce que** la zone de déplacement (30) est un rectangle dont la surface est sensiblement égale à:

   - pour un dispositif (1) dont le plateau (20) se déplace dans la direction de l'axe $\underline{x}$, dont le point $\underline{Q}$ est positionné en B/2 selon l'axe $\underline{y}$ et dont la tête de traitement (10) est positionnée en A selon l'axe $\underline{x}$ lorsqu'elle est aux extrémités de sa trajectoire:

$$(2 \text{ x } \underline{A} + \underline{\varepsilon}) \text{ x } (\underline{B} + \underline{\delta})$$

   dans lequel, $\underline{\delta}$ représente l'encombrement du premier moyen d'entraînement (21) suivant l'axe $\underline{y}$ et $\underline{\varepsilon}$ la flèche de la trajectoire de la tête de traitement (10) par rapport à une droite verticale positionnée en A selon l'axe $\underline{x}$;

- pour un dispositif (1) dont le plateau (20) se déplace dans la direction de l'axe $\underline{y}$, dont le point Q est positionné en A/2 selon l'axe x et dont la tête de traitement (10) est positionnée en B selon l'axe $\underline{y}$ lorsqu'elle est aux extrémités de sa trajectoire:

$$(2 \times \underline{B} + \underline{\varepsilon}) \times (\underline{A} + \underline{\delta})$$

dans lequel, $\delta$ représente l'encombrement du premier moyen d'entraînement (21) suivant l'axe $\underline{x}$ et $\varepsilon$ la flèche de la trajectoire de la tête de traitement (10) par rapport à une droite verticale positionnée en B selon l'axe $\underline{y}$.

3. Dispositif de déplacement (1) selon l'une quelconque des revendications précédentes, **caractérisé en ce que** l'axe $\underline{c}$ du bras (11) mobile comporte un second moyen d'entraînement destiné à coopérer avec le second moyen d'actionnement (12).

4. Dispositif de déplacement (1) selon l'une quelconque des revendications précédentes, **caractérisé en ce que** la tête de traitement (10) est mobile dans une direction normalement parallèle à l'axe $\underline{c}$ par le biais d'un troisième moyen d'actionnement.

5. Dispositif de déplacement (1) selon l'une quelconque des revendications précédentes, **caractérisé en ce que** le second moyen d'actionnement (12) et le second moyen d'entraînement sont respectivement un actionneur du type motoréducteur muni d'un secteur denté entraînant une crémaillère courbe fixée sur le bras (11).

6. Dispositif de déplacement (1) selon l'une quelconque des revendications précédentes, **caractérisé en ce que** le troisième moyen d'actionnement est un système vis-écrou.

7. Dispositif de déplacement (1) selon l'une quelconque des revendications précédentes, **caractérisé en ce que** le premier moyen d'actionnement (22) et le premier moyen d'entraînement (21) sont respectivement un actionneur du type motoréducteur muni d'un pignon entraînant une crémaillère fixée sur le plateau (20).

8. Dispositif de déplacement (1) selon l'une quelconque des revendications précédentes, **caractérisé en ce que** le plateau (20) est constitué d'un cadre (20a) articulé autour d'un élément de guidage (20b) et d'une plaque centrale (20c) de sorte que ledit cadre (20a) soit escamotable, **en ce que** le premier moyen d'entraînement (21) du plateau (20) est positionné sur ledit cadre (20a) de sorte que la plaque (20c) puisse être retiré dudit cadre (20a) et **en ce que** $\delta$ représente l'encombrement du premier moyen d'entraînement (21) et de l'élément de guidage (20b) suivant l'axe $\underline{y}$ ou $\underline{x}$, respectivement pour un déplacement du plateau (20) dans la direction de l'axe $\underline{x}$ ou $\underline{y}$.

9. Dispositif de déplacement (1) selon l'une quelconque des revendications précédentes, **caractérisé en ce que** la tête de traitement (10) est une tête permettant la découpe jet d'eau.

10. Dispositif de déplacement (1) selon la revendication 9, **caractérisé en ce que** le bras (11) mobile est creux pour accueillir le passage notamment de l'eau très haute pression et de l'air comprimé.

## Patentansprüche

1. Vorrichtung (1) zum Verschieben eines Bearbeitungskopfs (10) und einer Platte (20) in Bezug auf eine Ebene $\underline{P}$, wobei die Platte (20) in beliebiger Form in ein Rechteck mit der Breite $\underline{A}$ und der Länge $\underline{B}$ eingegrenzt ist und ein erstes Antriebsmittel (21) aufweist, das mit einem ersten Betätigungsmittel (22) zusammenwirken kann, so dass die Platte (20) in einer Ebene parallel zur Ebene $\underline{P}$ über einen Verschiebebereich (30), der aus mindestens zwei senkrechten Kanten gebildet wird, die einem Koordinatensystem $\underline{x}$, $\underline{O}$, $\underline{y}$ zugeordnet sind, in einer Richtung, die normalerweise parallel zu einer der Achsen $\underline{x}$ oder $\underline{y}$ verläuft, translatorisch verschoben wird, wobei das Verhältnis der Fläche des Verschiebebereichs (30) zur Fläche des Rechtecks, die die Platte (20) eingrenzt, mindestens gleich 2 ist, wobei die Vorrichtung (1) **dadurch gekennzeichnet ist, dass** sie mindestens einen Arm (11) mit einer beweglichen Länge $\underline{R}$ enthält, der an einem seiner Enden schwenkbar um eine Achse c montiert ist, die senkrecht zur Ebene $\underline{P}$ verläuft, durch ein zweites Betätigungsmittel (12) in Bewegung versetzt wird und am anderen Ende einen Bearbeitungskopf (10) umfasst, wobei sich die Achse $\underline{c}$ im Bewegungsbereich (30) der Platte (20) befindet und den Bewegungsbereich (30) am Punkt Q schneidet.

2. Verschiebevorrichtung (1) nach dem vorhergehenden Anspruch, **dadurch gekennzeichnet, dass** der Arm (11) so positioniert ist, dass er die Platte (20) in einem offenen Winkel (13) in Richtung der Verschiebeachse $\underline{x}$ oder $\underline{y}$ abtastet, und dass der Verschiebebereich (30) ein Rechteck ist, dessen Oberfläche im Wesentlichen gleich Folgendem ist:

- für eine Vorrichtung (1), deren Platte (20) sich in Richtung der Achse $\underline{x}$ bewegt, deren Punkt Q in B/2 entlang der Achse y positioniert ist und deren Bearbeitungskopf (10) in A entlang der Achse x positioniert ist, wenn er sich an den Enden seiner Bahn befindet:

$$(2 \times \underline{A} + \varepsilon) \times (\underline{B} + \underline{\delta})$$

wobei δ den Platzbedarf des ersten Antriebsmittels (21) entlang der Achse y und ε den Pfeil der Bahn des Bearbeitungskopfs (10) in Bezug auf eine vertikale, bei A positionierte Gerade entlang der Achse x darstellt;
- für eine Vorrichtung (1), deren Platte (20) sich in Richtung der Achse y bewegt, deren Punkt Q in A/2 entlang der Achse x positioniert ist und deren Bearbeitungskopf (10) in B entlang der Achse y positioniert ist, wenn er sich an den Enden seiner Bahn befindet:

$$(2 \times \underline{B} + \varepsilon) \times (\underline{A} + \underline{\delta})$$

wobei δ den Platzbedarf des ersten Antriebsmittels (21) entlang der Achse x und ε den Pfeil der Bahn des Bearbeitungskopfs (10) in Bezug auf eine vertikale, bei B positionierte Gerade entlang der Achse y darstellt.

3. Verschiebevorrichtung (1) nach einem der vorhergehenden Ansprüche, **dadurch gekennzeichnet, dass** die Achse c des beweglichen Arms (11) ein zweites Antriebsmittel umfasst, das dazu bestimmt ist, mit dem zweiten Betätigungsmittel (12) zusammenzuwirken.

4. Verschiebevorrichtung (1) nach einem der vorhergehenden Ansprüche, **dadurch gekennzeichnet, dass** der Bearbeitungskopf (10) durch ein drittes Betätigungsmittel in einer Richtung, die normal parallel zur Achse c verläuft, beweglich ist.

5. Verschiebevorrichtung (1) nach einem der vorhergehenden Ansprüche, **dadurch gekennzeichnet, dass** das zweite Betätigungsmittel (12) und das zweite Antriebsmittel jeweils ein Stellglied vom Typ Getriebemotor sind, das mit einem Zahnsegment versehen ist, das eine am Arm (11) befestigte gekrümmte Zahnstange antreibt.

6. Verschiebevorrichtung (1) nach einem der vorhergehenden Ansprüche, **dadurch gekennzeichnet, dass** das dritte Betätigungsmittel ein Schrauben-Mutter-System ist.

7. Verschiebevorrichtung (1) nach einem der vorhergehenden Ansprüche, **dadurch gekennzeichnet, dass** das erste Betätigungsmittel (22) und das erste Antriebsmittel (21) jeweils ein Stellglied vom Typ Getriebemotor sind, das mit einem Ritzel versehen ist, das eine an der Platte (20) befestigte Zahnstange antreibt.

8. Verschiebevorrichtung (1) nach einem der vorhergehenden Ansprüche, **dadurch gekennzeichnet, dass** die Platte (20) aus einem Rahmen (20a) besteht, der um ein Führungselement (20b) und eine Mittelplatte (20c) angelenkt ist, so dass der Rahmen (20a) versenkbar ist, dass das erste Antriebsmittel (21) der Platte (20) auf dem Rahmen (20a) positioniert ist, so dass die Platte (20c) von dem Rahmen (20a) entfernt werden kann, und dass δ den Platzbedarf des ersten Antriebsmittels (21) und des Führungselements (20b) entlang der Achse y bzw. x für eine Verschiebung der Platte (20) in Richtung der Achse x oder y darstellt.

9. Verschiebevorrichtung (1) nach einem der vorhergehenden Ansprüche, **dadurch gekennzeichnet, dass** der Bearbeitungskopf (10) ein Kopf ist, der das Wasserstrahlschneiden ermöglicht.

10. Verschiebevorrichtung (1) nach Anspruch 9, **dadurch gekennzeichnet, dass** der bewegliche Arm (11) hohl ist, um den Durchgang insbesondere von Wasser mit sehr hohem Druck und Druckluft aufzunehmen.

**Claims**

1. Device for moving (1) a treatment head (10) and a tray (20) in relation to a plane P, wherein said tray (20) of any shape is inscribed within a rectangle of width A and length B, and includes a first driving means (21) suitable for cooperating with a first actuating means (22) so as to move the tray (20) in translation within a plane that is parallel to said plane P in a movement zone (30) formed from at least two perpendicular edges associated with a reference frame x, O, y, in a direction that is normally parallel to one of said axes x or y, the ratio of the area of the movement zone (30) to the area of the circumscribed rectangle of the tray (20) being at least equal to 2, said device (1) being **characterised in that** it includes at least a movable arm (11) of length R, mounted on one of its ends so as to be able to pivot about an axis c that is perpendicular to said plane P, set in motion by a second actuating means (12) and comprising a treatment head (10) at the other end, said axis c being located in the movement zone (30) of the tray (20) and intersecting said movement zone (30) at point Q.

2. Movement device (1) according to the preceding claim, **characterised in that** the arm (11) is positioned so as to sweep the tray (20) at an open angle (13) in the direction of the axis of movement $\underline{x}$ or $\underline{y}$ and **in that** the movement zone (30) is a rectangle the area of which is substantially equal to:

- for a device (1) whose tray (20) moves in the direction of the axis $\underline{x}$, whose point $\underline{Q}$ is positioned at B/2 along the axis $\underline{y}$ and whose treatment head (10) is positioned at A along the axis x when it is at the ends of its trajectory:

$$(2 \ \times \ \underline{A} \ + \ \underline{\varepsilon}) \ \times \ (B+\underline{\delta})$$

wherein $\underline{\delta}$ represents the space requirement of the first driving means (21) along the axis $\underline{y}$ and $\underline{\varepsilon}$ the deflection of the trajectory of the treatment head (10) in relation to a vertical straight line positioned at A along the axis $\underline{x}$;
- for a device (1) whose tray (20) moves in the direction of the axis $\underline{y}$, whose point $\underline{Q}$ is positioned at A/2 along the axis $\underline{x}$ and whose treatment head (10) is positioned at B along the axis $\underline{y}$ when it is at the ends of its trajectory:

$$(2 \ \times \ \underline{B} \ + \ \underline{\varepsilon}) \ \times \ (A+\underline{\delta})$$

wherein $\underline{\delta}$ represents the space requirement of the first driving means (21) along the axis $\underline{x}$ and $\underline{\varepsilon}$ the deflection of the trajectory of the treatment head (10) in relation to a vertical straight line positioned at B along the axis $\underline{y}$;

3. Movement device (1) according to any one of the preceding claims, **characterised in that** the axis c of the movable arm (11) includes a second driving means intended to cooperate with the second actuating means (12).

4. Movement device (1) according to any one of the preceding claims, **characterised in that** the treatment head (10) is movable in a direction that is normally parallel to the axis c by means of a third actuating means.

5. Movement device (1) according to any one of the preceding claims, **characterised in that** the second actuating means (12) and the second driving means are respectively an actuator of the geared motor type provided with a toothed sector driving a curved rack secured to the arm (11).

6. Movement device (1) according to any one of the preceding claims, **characterised in that** the third actuating means is a screw-nut system.

7. Movement device (1) according to any one of the preceding claims, **characterised in that** the first actuating means (22) and the first driving means (21) are respectively an actuator of the geared motor type provided with a pinion driving a rack secured to the tray (20).

8. Movement device (1) according to any one of the preceding claims, **characterised in that** the tray (20) consists of a frame (20a) articulated around a guide element (20b) and a central plate (20c) so that said frame (20a) is retractable, **in that** the first driving means (21) of the tray (20) is positioned on said frame (20a) so that the plate (20c) can be removed from said frame (20a) and **in that** $\underline{\delta}$ represents the space requirement of the first driving means (21) and of the guide element (20b) along the axis $\underline{y}$ or $\underline{x}$, respectively for a movement of the tray (20) in the direction of the axis $\underline{x}$ or $\underline{y}$.

9. Movement device (1) according to any one of the preceding claims, **characterised in that** the treatment head (10) is a head allowing water-jet cutting.

10. Movement device (1) according to claim 9, **characterised in that** the movable arm (11) is hollow to accommodate the passage in particular of very-highpressure water and of compressed air.

[Fig. 1]

[Fig. 2]

[Fig. 3]

[Fig. 4]

**EP 3 983 183 B1**

## RÉFÉRENCES CITÉES DANS LA DESCRIPTION

**Documents brevets cités dans la description**

- FR 2938463

- EP 3247539 A